Europäisches Patentamt

(19) European Patent Office  (11) Publication number: **0 056 058**

Office européen des brevets  **B1**

(12) **EUROPEAN PATENT SPECIFICATION**

(45) Date of publication of patent specification: **05.06.85**  (51) Int. Cl.⁴: **G 01 N 21/07, G 01 N 21/90**

(21) Application number: **81902326.8**

(22) Date of filing: **24.07.81**

(86) International application number:
**PCT/FI81/00058**

(87) International publication number:
**WO 82/00360 04.02.82 Gazette 82/04**

(54) METHOD AND EQUIPMENT FOR THE MEASUREMENT OF PROPERTIES OF A LIQUID.

| | |
|---|---|
| (30) Priority: **24.07.80 FI 802338** | (73) Proprietor: **LABSYSTEMS OY**<br>**Pulttitie 9**<br>**SF-00810 Helsinki 81 (FI)** |
| (43) Date of publication of application:<br>**21.07.82 Bulletin 82/29** | (72) Inventor: **SUOVANIEMI, Osmo**<br>**Armas Lindgrenintie 15 A** |
| (45) Publication of the grant of the patent:<br>**05.06.85 Bulletin 85/23** | **SF-00570 Helsinki 57 (FI)**<br>Inventor: **EKHOLM, Pertti**<br>**Sammatintie 6 L 130**<br>**SF-00550 Helsinki 55 (FI)**<br>Inventor: **KAUKANEN, Esko** |
| (84) Designated Contracting States:<br>**AT CH DE FR GB LI LU NL SE** | **Akselinpolku 7 D 20**<br>**SF-02230 Espoo 32 (FI)**<br>Inventor: **JÄRNEFELT, Johan** |
| (56) References cited:<br>**DE-A-2 918 800**<br>**DE-B-2 357 890**<br>**SE-B- 414 552**<br>**US-A-3 999 868** | **Luotsikatu 5 A 2**<br>**SF-00160 Helsinki 16 (FI)**<br>Inventor: **PARTANEN, Paul**<br>**Venemestarintie 17 D**<br>**SF-00980 Helsinki 98 (FI)** |
| | (74) Representative: **Tillbrook, Christopher John**<br>**et al**<br>**c/o Reginald W. Barker & Co. 13, Charterhouse**<br>**Square**<br>**London EC1M 6BA (GB)** |

Courier Press, Leamington Spa, England.

## Description

The present invention is concerned with an optical method for the measurement of physical properties of a liquid present in a vessel according to the preamble of claim 1. The invention is also concerned with an apparatus for the implementation of the method according to the preamble of claim 7.

Various tests based on agglutinations are in common use, e.g., in the case of blood-group identifications, antibody determinations, and rheumatic-factor measurements. In blood-group analytics and in antibody determinations the agglutination of red blood cells is concerned, whereas, e.g., the rheumatic factor is commonly measured by means of the agglutination of latex particles.

It has been customary to read the results of agglutination reactions visually. An experienced reader is also quite skilful in distinguishing between agglutination and non-agglutination. Such a mode of output is, however, quite subjective, and this is why the result is not always completely reliable. In clear situations with strong agglutination, visual readings is certainly no problem, but weak reactions of agglutination are often problematic. Among agglutation reactions, most difficult to interpret is, e.g., a weak Rh-positive result obtained in blood-group identifications. In such situations it is of essential importance to obtain a reliable output, because the safety of the patient is concerned.

The objective of the method in accordance with the invention (observation of, e.g., agglutination reactions and reading of the final results) is to be able to ascertain the difference between agglutination and non-agglutination sufficiently clearly, reproducibly, and carefully. By means of the principle of vertical measurement (Suovaniemi, Osmo, "Performance and Properties of the Finn-pipette Anlyzer System", *Proceedings of the Second National Meeting on Biophysics and Biotechnology in Finland*, 183, 1976) it is possible to measure agglutination reactions. However, in the case of very weak agglutinations, one beam of light does not produce a sufficient difference in absorbance between agglutination and non-agglutination. In the method in accordance with the invention any uncertainty is eliminated by performing the measurement of the properties of the agglutination precipitate at several points once or several times so as to observe the formation of the precipitate as a function of time.

The agglutinated precipitate formed on the bottom of the reaction vessel is, viz., structurally different from a non-agglutinated precipitate. The former is, e.g., unhomogeneous, at the middle part denser than at the sides, whereas the latter is even and relatively homogeneous. By performing, e.g., the measurement of absorption of light at several different points of the precipitate obtained, it is possible to distinguish between agglutinated precipitate and non-agglutinated precipitate reliably.

Known measurement systems, for example as taught in US—A—3999868 and DE—A—235790 do not, particularly in the former case, accommodate automatic orientation of the measurement vessel to facilitate the alignment and passage of a measurement beam or do not, particularly in the latter case, envisage or embrace either or both continued intermittent measurement by transmission through and reflection from the measurement sample.

According to one aspect of the invention there is provided an optical method for the measurement of physical properties of a liquid sample present in a vessel (2), for example for the measurement of the absorbance of a liquid, of the properties of an agglutinate, precipitate (4) or any other reaction result at the bottom of the vessel, comprising the steps of
— rotating the vessel (2) about a vertical rotor shaft (15) of a centrifuge;
— irradiating the sample with a horizontal beam (5) of electromagnetic, in particular visible, radiation from a source (1);
— receiving radiation from the sample at a detector (3) while the vessel (2) is rotated through a space irradiated by the source (1) characterised by
— pivoting the vessel (2) by the effect of centrifugal force during irradiation and reception of the radiation, so that the vessel axis is substantially horizontal;
— monitoring at least one limited area at the bottom of the vessel with the detector (3);
— producing a measurement over a particular read time interval during which the vessel moves through the said space, and
— producing an output related to said measurement.

According to another aspect of the invention there is provided an apparatus for the implementation of the method as claimed in Claim 1, which apparatus comprises a rotor mounted for revolution about an axis (15), a vessel (2) for a reaction sample, fastening means (16, 18) for fastening the vessel to the rotor, a detector (3) to receive electromagnetic radiation, a source (1) of electromagnetic radiation arranged to produce a horizontal measurement beam directed to the detector, and an output unit to provide a measurement output from the detector, characterised in that said fastening means comprises an articulated joint pivoting about a horizontal shaft (18) perpendicular to the axis of the rotation of the rotor, and in that, either the source of electromagnetic radiation (1) or the detector (3) receiving radiation, covers only a limited sample component field at the bottom of the vessel (2), the source of radiation (1) or the detector (3) receiving radiation being a narrow, vertical slit placed outside a circle formed by the path of movement of the bottom of the reaction vessel, or alternatively the source of radiation (1) or the detector (3) receiving radiation being point-shaped and placed outside a circle formed by the path of movement of the bottom of the reaction displaceable in the vertical direction during the revolutions of the rotor, or further alternatively the source of radiation (1) or the detector (3) receiving radiation being point-shaped and two or more of them (8 to 10 or 21 to 30) are fitted in a vertical line, and in that, when several sources of light are used in a line, each source of light is in operation consecutively.

In this method the measurement of the precipitate or any other type of reaction product produced is accomplished at several points in the following way. The reaction vessel is placed in a frame or holder which is fastened to the rotor of the centrifuge so that the longitudinal axis of the reaction vessel is during rotation of the rotor pivoted to the horizontal plane. The beam of measurement then passes in the direction of the longitudinal axis of the reaction vessel, which has been pivoted to the horizontal position. Outside the circle along which the bottom of the reaction vessel travels e.g., the source of light is placed, which is either point-shaped or of the shape of a vertical slit and whose light is directed at the centre of rotation of the rotor. Inside the circle along which the mouth of the reaction vessel passes, the detector is placed so that the light coming from the said source of light falls on the detector. When the rotor rotates, the reaction vessel by-passes the beam of measurement, whereby the various parts of the precipitate placed on the bottom of the reaction vessel pass at a high speed of revolution through the beam of measurement. The detector registers the absorption of light at different points of the precipitate as a function of time as the precipitate by-passes the source of light, and the electronics fitted into the apparatus decide whether the precipitate is agglutinated or not, based on the registered line of light absorbance values.

Some of the features typical of the apparatus based on the method described above are as follows:

1. Therein a modified principle of vertical measurement is applied, wherein the beam of measurement is parallel to the centrifugal acceleration.

2. The reaction vessel is placed on a pivoting holder of the rotor of the centrifuge, and it is pivoted so that, when the rotor rotates, the longitudinal axis of the vessel is horizontal and parallel to the radius of the rotor.

3. The horizontal beam of measurement is directed towards, or away from, the centre point of the rotor in the direction of the radius of the rotor so that, when rotating, the reaction vessel by-passes the beam.

4. The detector registers the absorption of light at subsequent points of the precipitate placed on the bottom of the reaction vessel rapidly and in the way determined by the control electronics.

5. The apparatus may also be applied to the measurement phenomena other than absorption of light, e.g., to the measurement of fluorescence, luminescence, etc.

The invention will be described in more detail below with reference to the attached drawings, wherein

Figures 1a and 1b show two different precipitates,

Figure 2 is a schematic and partly sectional presentation of an apparatus in accordance with the invention,

Figure 3 schematically shows an alternative in which one slit-shaped source of light is used that can be shifted in relation to the reaction vessel,

Figure 4 shows an absorbance curve obtained from the reaction vessel of Figure 1; underneath the curve, the reaction vessel of Fig. 1 is shown as viewed from the top (in the curves of the figures, the x-axis illustrates the location of the point of measurement on the path of movement and the y-axis illustrates the absorbance at each particular time or in each particular point),

Figure 5 shows absorbance curves obtained by means of the source of light shown in Fig. 6; underneath the curves the precipitate measured is shown as viewed from above,

Figure 6 is a schematical perspective view of a source of light that consists of several point-shaped sources of light, and

Figure 7 shows absorbance curves, underneath of which the precipitate measured as a top view and the detector used are illustrated.

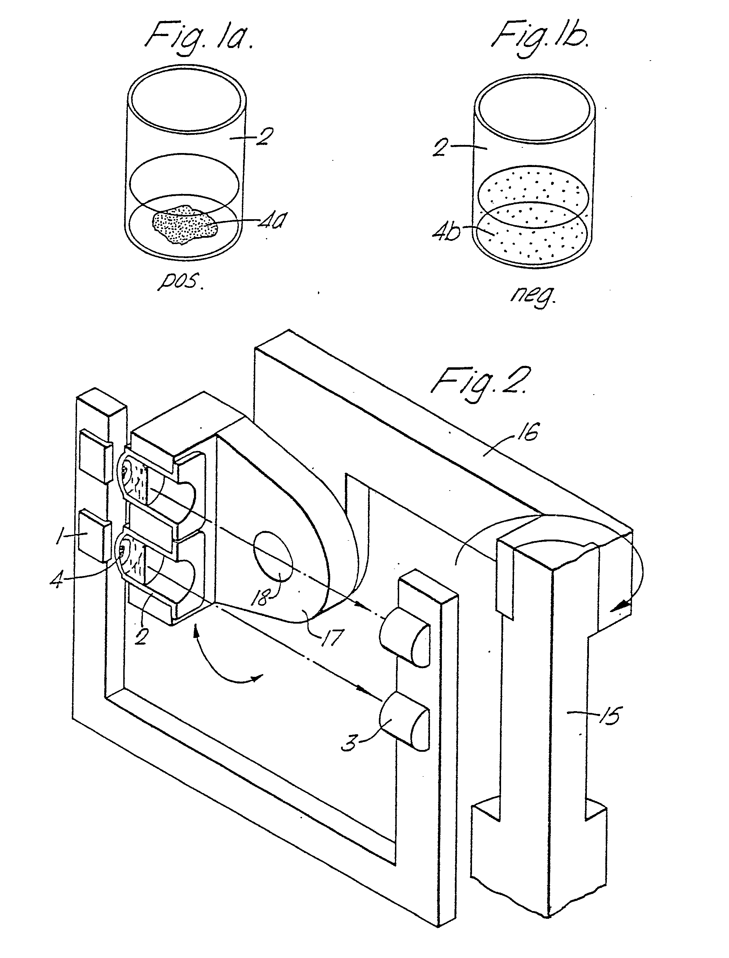

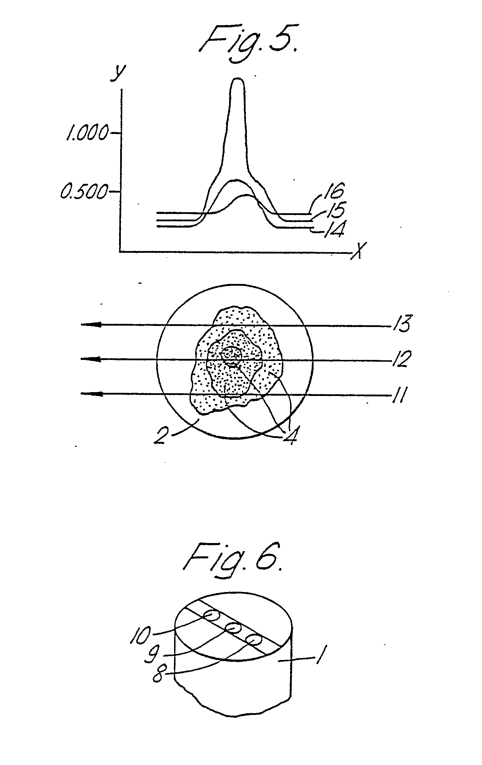

In Figure 1a there is a precipitate 4a on the bottom of the reaction vessel 2, the shape and density of the said precipitate being at different points different from those of the precipitate 4b shown in Figure 1b. The precipitate 4a illustrates an agglutinated situation, whereas Figure 4b represents a non-agglutinated precipitate in the situation of measurement.

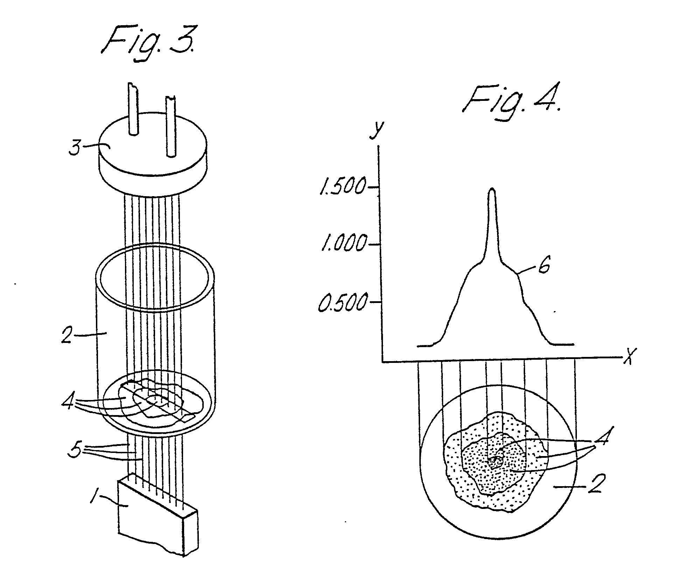

Figure 2 shows the shaft 15 of rotation of the centrifuge, a rotor arm 16 connected to the shaft, as well as a holder 17, connected to the arm as pivotable around a horizontal shaft 18, the said holder being provided with two reaction vessels 2 in the horizontal position that is assumed by them when the rotor rotates. The light departing from the slit-shaped sources of light 1 passes through the reaction results, e.g., precipitate 4, placed on the bottom of the reaction vessels 2 and reaches the detectors 3, which, during rotation of the rotor of the centrifuge, register the absorption of light of the precipitate 4 at different points of the precipitate.

Figure 3 schematically shows a slit-shaped source of light 1, a reaction vessel 2, and a detector 3. The length of the slit is preferably somewhat less than the diameter of the vessel bottom. On the bottom of the reaction vessel 2 there is a precipitate 4, which has layers of different types and thicknesses. When e.g., the reaction vessel 2 passes across the stationary source of light 1 and detector 3 once in the transverse direction of the slit 1 so that the slit-shaped beam of light 5 passes, point by point, through the precipitate 4 on the bottom of the reaction vessel 2, the absorbance curve 6 shown in Fig. 4, is obtained, which curve may be continuous or consist of individual points.

Figure 4 also shows a top view of the precipitate 4 on the bottom 2 of the reaction vessel. The measurement has been performed by at a time always measuring a stripe of the shape of the slit-shaped source of light out of the precipitate on the bottom of the reaction vessel and by producing the output of the measurement value of this stripe. The production of the output may take place for each stripe separately, whereby a stepwise curve or a curve consisting of individual points is obtained, or as a continuous measurement, whereby the detector measures constantly during the movement and a continuous curve is obtained as the result.

Figure 5 shows a precipitate measured from the bottom of the reaction vessel so that the reaction vessel has passed across the point-shaped sources of light 8 to 10 shown in Figure 6 so that measurement has first been performed by means of the source of light 8 and the other beams 9 and 10 have been closed. During the next revolution of the rotor the measurement has been performed by means of the beam 9, and the beams 8 and 10 have been closed. Finally, the beams 8 and 9 have been closed, and the measurement has been performed by means of the beam 10. In Figure 5, the beam 10 corresponds to the scan 13 and the absorbance curve 16. Correspondingly, the beams 9 and 8 correspond the scans 12 and 11 and the absorbance curves 15 and 14. It is also natural that the point-shaped source of light may move along the slit shown in Figure 6, being alternatingly in positions 8, 9 and 10.

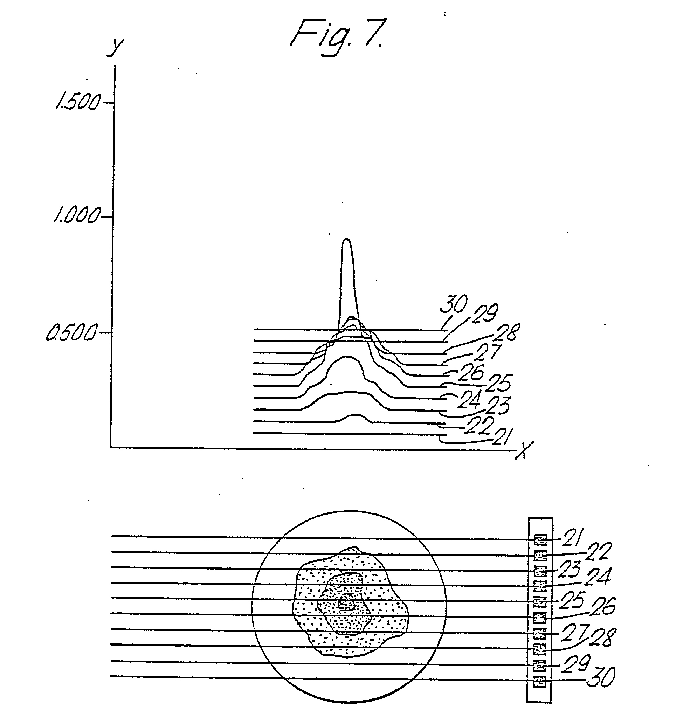

In Figure 7 it is shown how a detector placed outside the rotor may consist of several sub-detectors (21 to 30) mounted in a vertical line, the said sub-detectors registering the light coming from the source of light placed inside the rotor and through the precipitate placed on the bottom of the vessel, each of them at a height of its own. In this way highly abundant information is obtained from the precipitate placed on the bottom of the reaction vessel. Of course, each detector may also consist of several separate sub-detectors positioned in a matrix form, whereby a complete topography is obtained from the reaction during each revolution. It is also natural that the evaluation of the topographic result may be observed as a function of time, whereby different topographies in relation to time mean different final results.

The invention is not confined to the above alternative embodiments alone, but it may show even considerable variation within the scope of the patent claims.

It is evident that in the method described above the source of light and the detector may change places, whereby the detector is placed outside the circle of the rotor and the source of light inside. In such a case the detector must be correspondingly given the shape of a point or of a vertical slit.

In this method there may be several reaction vessels on the circumference of the same rotor, in which case the results are registered subsequently from one vessel after the other in the way described above and the apparatus is provided with electronics capable of sorting and arranging the readings.

It is also possible to design the holders for reaction vessels on the rotor so that a matrix of vessels consisting of several individual reaction vessels can be placed on each holder, e.g. a matrix of the type used as a cuvette set in the PF-9 photometer (U.S. Patent 4,144,030). In such a case the apparatus may be constructed as a multi-channel apparatus so that it is provided with several beams of measurement of the type described above, one beam above the other, at the heights corresponding the reaction vessels.

If a point-shaped source of light or detector is used, it is possible to allow it to move in the vertical direction so that, during the movement of rotation, the beam of measurement passes through the precipitate on the bottom of the reaction vessel at several points, during each subsequent revolution of the rotor slightly higher or lower. In this way it is possible to assemble abundant information on the shape and structure of the precipitate, and thereby to decide more certainly whether it is agglutinated or not. By means of the measurement it is possible to assemble information on the evolution of the precipitate as a function of time, on its location, shape, and/or on the density of its various points.

The method of measurement may be based on photometry or multiphotometry, the latter meaning a photometer which comprises several channels so that each sample has a source of light and a detector of its own.

The method of measurement may, of course, being a single-channel or multi-channel method, be additionally based, e.g., on turbidometry, fluorometry, or, e.g., on the use of a source of radiation and a receiver for luminescence or laser beam phenomena.

The positioning of the reaction vessels or equivalent, of sources of measurement beams, of detectors, etc. auxiliary equipment may be performed in the way most appropriate in each particular case. The equipment may also involve various degrees of automation, e.g., in the pipetting of the samples and reagents, in the shifting of the beams of measurement, and in the processing of the results. It is natural that, instead of one method of measurement, the reaction vessels may be measured simultaneously or subsequently by means of two or more wave lengths of methods of measurement (e.g., photometry and fluorometry), the final result being based on the information thereby obtained.

The invention permits, e.g., enzyme and endpoint measurement in the reaction vessel. In the case of enzyme measurements it is possible to observe the progress of the reaction at certain time intervals, and the final result is determined from the measurement values in this way obtained.

## Claims

1. An optical method for the measurement of physical properties of a liquid sample present in a vessel (2), for example for the measurement of the absorbance of a liquid, of the properties of an agglutinate, precipitate (4) or any other reaction result at the bottom of the vessel, comprising the steps of

— rotating the vessel (2) about a vertical rotor shaft (15) of a centrifuge;

— irradiating the sample with a horizontal beam (5) of electromagnetic, in particular visible, radiation from a source (1);

— receiving radiation from the sample at a detector (3) while the vessel (2) is rotated through a space irradiated by the source (1) characterised by

— pivoting the vessel (2) by the effect of centrifugal force during irradiation and reception of the radiation, so that the vessel axis is substantially horizontal;

— monitoring at least one limited area at the bottom of the vessel with the detector (3);

— producing a measurement over a particular read time interval during which the vessel moves through the said space, and

— producing an output related to said measurement.

2. A method as claimed in Claim 1, characterised in that out of the bottom of the vessel a narrow, vertical stripe is measured.

3. A method as claimed in Claim 2, characterised in that the production of the output takes place graphically as a continuous or stepwise curve (6), one of the axes (x) in the system of coordinates representing the position of the field to be measured on the bottom of the vessel and the other axis (y) representing the measurement values, e.g. the absorbance.

4. A method as claimed in Claim 1, characterised in that, out of the bottom of the vessel, a point-shaped field is measured whose position in the vertical direction is changed during the revolution of the centrifuge.

5. A method as claimed in Claim 1, characterised in that, out of the bottom of the vessel, a vertical line consisting of two or more point-shaped fields is measured.

6. A method as claimed in Claim 4 or 5, characterised in that the production of the output takes place graphically as two or more curves (14 to 16 or 21 to 30), one of the axes (x) of the system coordinates representing the position of the field to be measured on the bottom of the vessel and the other axis (y) representing the measurement value, e.g. the absorbance.

7. Apparatus for the implementation of the method as claimed in Claim 1, which apparatus comprises a rotor mounted for revolution about an axis (15), a vessel (2) for a reaction sample, fastening means (16, 18) for fastening the vessel to the rotor, a detector (3) to receive electromagnetic radiation, a source (1) of electromagnetic radiation arranged to produce a horizontal measurement beam directed to the detector, and an output unit to provide a measurement output from the detector, characterised in that said fastening means comprises an articulated joint pivoting about a horizontal shaft (18) perpendicular to the axis of rotation of the rotor, and in that, either the source of electromagnetic radiation (1) or the detector (3) receiving radiation covers only a limited sample component field at the bottom of the vessel (2), the source of radiation (1) or the detector (3) receiving radiation being a narrow, vertical slit placed outside a circle formed by the path of movement of the bottom of the reaction vessel, or alternatively, the source of radiation (1) or the detector (3) receiving radiation being point-shaped and placed outside a circle formed by the path of movement of the bottom of the reaction vessel and displaceable in the vertical direction during the revolutions of the rotor, or further alternatively, the source of radiation (1) or the detector (3) receiving radiation being point-shaped members and two or more of the members (8 to 10 or 21 to 30) are fitted in a vertical line, and in that, when several sources of light are used in a line, each source of light is in operation consecutively.

8. An apparatus as claimed in Claim 7, characterised in that a unit consisting of several vessels can be fitted to the apparatus, and it comprises several sources of radiation and detectors facing the various vessels of the unit, whereby it is possible to perform the measurement simultaneously or consecutively from several vessels.

## Patentansprüche

. 1. Optisches Verfahren zum Messen der physikalischen Eigenschaften einer in einem Gefäß (2) befindlichen Flüssigkeitsprobe, zum Beispiel zum Messen des spektralen Absorptionsmaßes einer Flüssigkeit, der Eigenschaften einer Agglutination, eines Niederschlages (4) oder jedes anderen Reaktionsproduktes am Boden des Gefäßes, mit den Schritten:

— Rotierenlassen des Gefäßes (2) um die vertikale Rotationsachse (15) einer Zentrifuge;

— Bestrahlen der Probe mit einem horizontalen Strahl (5) einer elektromagnetischen, insbesondere sichtbaren Strahlung von einer Quelle (1) aus;

— Auffangen der Strahlung von der Probe in einem Detektor (3), während das Gefäß (2) durch einen Raum gedreht wird, der von der Quelle (1) bestrahlt wird, gekennzeichnet durch

— Schwenken des Gefäßes (2) infolge von Zentrifugalkraft während des Bestrahlens und des Auffangens der Strahlung, so daß die Gefäßachse im wesentlichen horizontal verläuft;

— Abtasten mindestens einer begrenzten Fläche am Boden des Gefäßes mit dem Detektor (3);

— Hervorbringen einer Messung über ein bestimmtes Meßzeitintervall, während dessen das Gefäß durch den Raum bewegt wird, und Hervorbringen eines Ergebnisses, das zu der Messung in Beziehung steht.

2. Verfahren nach Anspruch 1, dadurch gekennzeichnet, daß aus dem Bereich des Gefäßbodens ein schmaler, vertikaler Streifen gemessen wird.

3. Verfahren nach Anspruch 2, dadurch gekennzeichnet, daß das Hervorbringen des Ergebnisses graphisch als eine durchlaufende oder gestufte Kurve (6) geschieht, bei der die eine Achse (x) des Koordinatensystems die Lage des zu messenden Feldes auf dem Gefäßboden und die andere Achse (y) die Meßergebnisse wiedergeben, zum Beispiel das spektrale Absorptionsmaß.

4. Verfahren nach Anspruch 1, dadurch gekennzeichnet, daß aus dem Bereich des Gefäßbodens ein punktförmiges Feld gemessen wird, dessen Lage in vertikaler Richtung während der Umdrehung der Zentrifuge geändert wird.

5. Verfahren nach Anspruch 1, dadurch gekennzeichnet, daß aus dem Bereich des Gefäßbodens eine vertikale Linie gemessen wird, die aus zwei oder noch mehr punktförmigen Feldern besteht.

6. Verfahren nach Anspruch 4 oder 5, dadurch gekennzeichnet, daß die Hervorbringung des Ergebnisses graphisch durch zwei oder noch mehr Kurven (14 bis 16 oder 21 bis 30) geschieht, bei denen die eine Achse (x) des Koordinatensystems die Lage des zu messenden Feldes an dem Boden des Gefäßes und die andere Achse (y) den Meßwert weitergibt, zum Beispiel das spektrale Absorptionsmaß.

7. Vorrichtung zur Durchführung des Verfahrens nach Anspruch 1, mit einem um eine Achse (15) drehbaren Rotor, einem Gefäß (2) für eine Reaktionsprobe, Haltemitteln (16, 18) zur Halterung des Gefäßes an dem Rotor, einem Detektor (3) zum Auffangen elektromagnetischer Strahlung, einer elektromagnetischen Strahlungsquelle (1), die so angeordnet ist, daß sie einen horizontalen Meßstrahl auf den Detektor richtet, und einer Ergebnisausgabe-Einheit zur Hervorbringung eines Meßergebnisses von dem Dektektor, dadurch gekennzeichnet, daß die Haltemittel ein um eine horizontale und senkrecht zur Rotationsachse des Rotors ausgerichtete Welle (18) drehbares Drehgelenk enthalten, daß entweder die elektromagnetische Strahlungsquelle (1) oder der die Strahlung auffangende Detektor (3) nur ein begrenztes Probenteilfeld an dem Boden des Gefäßes (2) erfaßt, wobei die Strahlungsquelle (1) oder der die Strahlung auffangende Detektor (3) als schmaler, vertikaler Schlitz gestaltet ist, die bzw. der außerhalb eines durch die Bewegung des Reaktionsgefäßbodens gebildeten Kreis liegt, oder alternativ die Strahlungsquelle (1) oder der die Strahlung auffangende Detektor (3) punktförmig gestaltet ist, die bzw. der außerhalb eines durch die Bewegung des Reaktionsgefäßbodens gebildeten Kreises liegt und in vertikaler Richtung während der Umdrehungen des Rotors verschieblich ist, oder weiter alternativ die Strahlungsquelle (1) oder der die Strahlung auffangende Detektor (3) als punktförmige Glieder ausgebildet ist, und zwei oder noch mehr Glieder (8 bis 10 oder 21 bis 30) auf einer vertikalen Linie angeordnet sind, und daß, wenn mehrere Lichtquellen auf einer Linie verwendet werden, jede Lichtquelle in Abfolge in Betrieb ist.

8. Vorrichtung nach Anspruch 7, dadurch gekennzeichnet, daß an der Vorrichtung eine Einheit mit mehreren Gefäßen angebracht werden kann und mehrere Strahlungsquellen und Detektoren vorhanden sind, die auf die verschiedenen Gefäße der Einheit gerichtet sind, wobei eine Messung gleichzeitig oder nacheinander an mehreren Gefäßen möglich ist.

**Revendications**

1. Procédé optique pour la mesure des propriétés physiques d'un échantillon de liquide présent dans un récipient (2), par exemple pour la mesure de l'absorbance d'un liquide, des propriétés d'un agglutinat, d'un précipitat (4) ou de tout autre résultat d'une réaction, au fond du récipient, comprenant les opérations:

On fait tourner le récipient (2) autour de l'arbre vertical (15) du rotor d'une centrifugeuse;

— on irradie l'échantillon à l'aide d'un faisceau horizontal (5) d'une radiation électromagnétique, en particulier une radiation visible, provenant d'une source (1);

— on reçoit la radiation provenant de l'échantillon dans un détecteur (3) pendant que le récipient (2) est en rotation dans un espace irradié par la source (1), caractérisé en ce que:

— on fait pivoter le récipient (2) sous l'effet de la force centrifuge pendant l'irradiation et la réception de l'irradiation de façon que l'axe du récipient soit substantiellement horizontal;

— on surveille à l'aide du détecteur (3) au moins une zone limitée du fond du récipient;

— on exécute une mesure pendant un intervalle d'un temps de lecture particulier au cours duquel le récipient se déplace à travers ledit espace,

— on produit un signal de sortie en rapport avec cette mesure.

2. Procédé selon la revendication 1, caractérisé en ce qu'on mesure une bande verticale, étroite, du fond du récipient.

3. Procédé selon la revendication 2, caractérisé en ce que la production du signal de sortie se fait graphiquement sous forme d'une courbe continue ou d'une courbe à paliers (6), l'un des axes (x) du système des coordonnées représentant la position du champ à mesurer sur le fond du récipient et l'autre axe (y) représentant la signification des mesures, par exemple l'absorbance.

4. Procédé selon la revendication 1, caractérisé en ce qu'on mesure du fond du récipient un champ ayant la configuration d'un point dont on modifie la position en direction verticale pendant les révolutions de l'appareil centrifuge.

5. Procédé selon la revendication 1, caractérisé en ce qu'on mesure du fond du récipient une ligne verticale composée de deux ou de plusieurs champs ayant la configuration d'un point.

6. Procédé selon l'une quelconque des revendications 4 ou 5, caractérisé en ce que la production du signal de sortie se fait graphiquement sous forme de deux ou de plusieurs courbes (14 à 16 ou 21 à 30), l'un des axes (x) du système des coordonnées représentant la position du champ à mesurer sur le fond du récipient et l'autre axe (y) représentant la signification des mesures, par example l'absorbance.

7. Appareil pour la mise en oeuvre du procédé selon la revendication 1, comprenant un rotor monté pour tourner autour d'un axe (15), un récipient (2) pour un échantillon d'une réaction, des moyens de fixation (16, 18) pour la fixation du récipient au rotor, un détecteur (3) disposé pour recevoir une radiation électromagnétique, une source (1) d'une radiation électromagnétique disposée pour produire un faisceau de mesure horizontal dirigé vers le détecteur, et une unité de sortie pour fournir un signal de sortie de mesure provenant du détecteur, caractérisé en ce que les moyens de fixation comprennent un joint articulé de pivotement autour d'un arbre horizontal (18) perpendiculaire à l'axe de rotation du rotor, et en ce que, soit la source de la radiation électromagnétique (1), soit le détecteur (3) recevant la radiation couvre seulement un champ limité de l'échantillon au fond du récipient (2), la source de radiation (1) ou le détecteur (3) recevant la radiation étant une fente étroite verticale placée à l'extérieur d'un cercle formé par la trajectoire du déplacement du fond du récipient de la réaction, ou en variante, la source de radiation (1) ou le détecteur (3) recevant la radiation ayant la configuration d'un point et étant placé à l'extérieur d'un cercle constitué par la trajectoire du déplacement du fond du récipient de la réaction et étant déplaçable dans la direction verticale pendant les révolutions du rotor, ou en variante encore, la source de radiation (1) ou le détecteur (3) recevant la radiation étant des éléments ayant la configuration d'un point et deux ou plusieurs de ces éléments (8 à 10 ou 21 à 30) étant disposés sur une ligne verticale, et en ce que, quand plusieurs sources de lumière sont utilisées le long d'une ligne, les sources de lumière sont mises en service consécutivement.

8. Appareil selon la revendication 7, caractérisé en ce qu'une unité comprenant plusieurs récipients peut être disposée pour équiper l'appareil et elle comprend plusieurs sources de radiation et de détecteurs tournés vers les divers récipients de l'unité, de sorte qu'il est possible d'exécuter les mesures simultanément ou consécutivement en rapport avec divers récipients.

Fig. la.

Fig. lb.

2

4a

pos.

2

4b

neg.

Fig. 2.

16

1

4

2

18

17

3

15

1

Fig. 3.

Fig. 4.

*Fig. 5.*

*Fig. 6.*

Fig. 7.